# EUROPEAN PATENT SPECIFICATION

(11) **EP 2 785 231 B1**
(45) Date of publication and mention of the grant of the patent: **28.10.2015**
(21) Application number: 12798803.8
(22) Date of filing: 22.11.2012
(51) Int. Cl.: A47J 43/07

(54) **KITCHEN MACHINES**
KÜCHENMASCHINEN
MACHINES DE CUISINE

(30) Priority: 29.11.2011 GB 201120493
(43) Date of publication of application: 08.10.2014
(73) Proprietor: Kenwood Limited, Havant, Hampshire PO9 2NH (GB)
(72) Inventor: DOWNIE, David, Havant Hampshire PO9 2NH (GB); PALMER, Paul, Havant Hampshire PO9 2NH (GB)
(74) Representative: Hector, Annabel Mary
(86) International application number: PCT/GB2012/052889
(87) International publication number: WO 2013/079919

(56) References cited:
- WO-A1-2004/026093
- WO-A1-2009/093973
- WO-A1-2010/082857
- DE-A1- 4 224 428
- US-B1- 6 748 853

## Description

This invention relates to kitchen machines, and it relates more particularly to kitchen machines such as food processors which utilise driven bladed members to cut, chop, slice or otherwise comminute foodstuffs.

The document US 6 748 853 discloses a food processing machine.

Kitchen machines are usually required to process efficiently foodstuffs having a wide range of characteristics and a commonly adopted approach is to utilise high-powered motors to ensure that the bladed member can be driven through, and thus cope at least reasonably well with, the complete range of foodstuffs it is designed to deal with.

This approach tends to be wasteful of energy in that the motors used tend to be power hungry and it is often the case that the bladed member is over-driven when used for many of the tasks it is required to perform.

An objective of this invention is to reduce the power consumed by the main drive unit of a kitchen machine, be it a food processor of any other type of machine that cuts or slices foodstuffs.

According to the invention there is provided a kitchen machine having a bladed member comprising a disc bearing a blade, means including a motor-driven shaft connectable to the disc for rotating the disc and thereby moving the blade through foodstuffs to be processed, and means for inducing vibrations in said disc and/or the blade.

It has been determined that vibrations, preferably of ultrasonic frequency, introduced into the bladed member of a kitchen machine, and/or into its blade, can ease the passage of the blade through foodstuffs, hence reducing the power required to effect the required processing.

Preferably, the means for inducing vibrations includes a piezoelectric element attached or coupled to the bladed member, and/or to a blade thereof, and drive means for applying electrical waveforms of predetermined amplitude and frequency to the element.

The piezoelectric element may vibrate in any mode, such as face-shear or longitudinal mode, and its frequency of operation may be chosen to have a predetermined relationship to a resonant frequency of the bladed member or of some part or component thereof.

In preferred embodiments of the invention, the disc has a boss which couples to said shaft; said boss supporting slip rings and connection means configured to transfer said electrical waveforms to said piezoelectric element in order to stimulate said vibrations.

The machine may further include brush means for making electrical connection with said slip rings and means for applying said electrical waveforms to said brush means.

In some embodiments of the invention, in which the bladed member comprises a disc bearing a blade and the machine further includes a motor-driven drive shaft adapted, when coupled to the disc, to rotate said bladed member, it is preferred that said drive shaft extends axially from a base of said machine and that said electrical waveforms are coupled to the shaft by way of slip rings fixedly coupled to connectors extending axially along said drive shaft. Where provided, such axially-extending connectors preferably terminate in splines adapted to couple said shaft to said disc.

The bladed member may be formed with shaping, thickenings, ribbing and/or other constructional features to focus or direct ultrasonic vibrations towards selected areas of the member; for example towards a blade mounted thereon.

One or more areas of the bladed member may be tuned to resonate with the piezoelectric element, thereby to enhance the amplitude of the vibratory motion in such area or areas.

Utilising the vibrations to create a "micro-motion" in the bladed member and/or in the blade itself as it is driven through the foodstuff makes it possible to reduce the friction on either side of the bladed member, so enabling it to pass more easily through the foodstuff, thus reducing the power consumed by the motor unit. The power reduction may be sufficient, in some instances, to permit smaller electric motor units to be used.

In addition, wear and tear on the blade of the bladed member is also reduced as a direct consequence of the reduction in friction resulting from the induction of vibrations.

In order that the invention may be clearly understood and readily carried into effect, one embodiment thereof will now be described, by way of example only, with reference to the accompanying drawings, of which:
Figure 1 shows, in perspective and exploded diagrammatic form, and by way of example only, certain elements of a typical food processor that help to explain implementations of this invention;
Figure 2 shows a partial underside view of a bladed member for a kitchen machine in accordance with one example of the invention;
Figure 3 shows a partial top-side view of the bladed member shown in Figure 2;
Figure 4 shows an underside view of a bladed member for a kitchen machine in accordance with another example of the invention;
Figure 5 shows a schematic connector layout for the machine; and
Figure 6 shows a partial component layout for part of the machine.

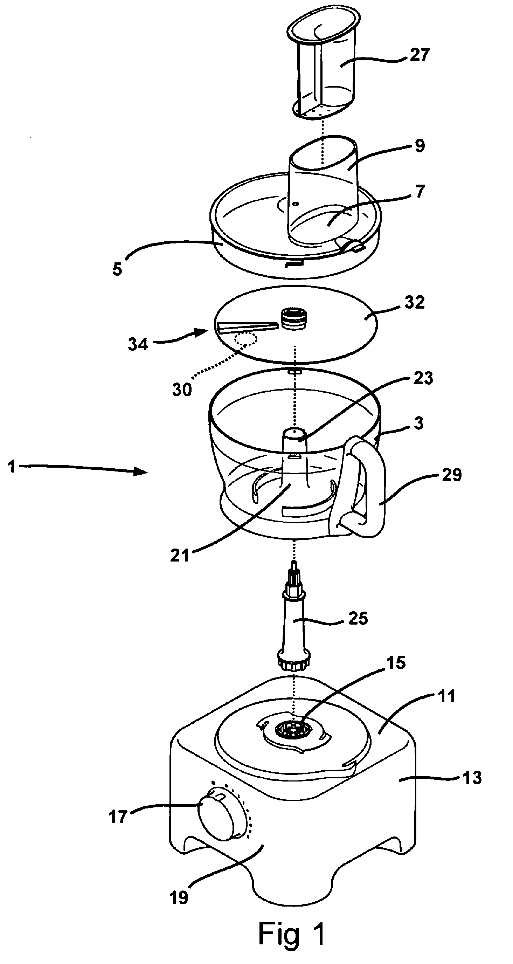

Referring to Figure 1, a bladed member (disc) 32 in accordance with one example of this invention is typically used with a food processor 1 which includes a bowl 3 in which foodstuffs can be processed. The bowl 3 is provided with a lid 5 having an aperture 7 therein, and carries a feed-tube 9, through which foodstuffs to be processed can be introduced into the bowl. The feed-tube 9 is located over the aperture 7, so that foodstuffs can be introduced into the bowl through the tube 9.

The bowl 3 is supported for operation upon an upper surface 11 of a base 13 which contains an electric motor (not shown) and presents a drive outlet 15, coupled to the motor, on its bowl-supporting surface 11. The speed of the motor and its mode of operation (e.g. continuous or pulsed) is, in this example, controllable by means of a rotatable knob 17 on one of the upright surfaces 19 of the base 13 but it will be appreciated that any convenient form of control can be used.

The base of the bowl 3 is centrally apertured, as shown at 21, allowing access to the drive outlet 15 on the base unit 13, and is further, in known manner, integrally formed with an internal, hollow tube 23 centered on the aperture 21. A drive shaft 25 which, in use, engages and is driven by the drive outlet 15, extends through the tube 23, and thus centrally of the bowl 3, to a location, close to the underside of the lid 5, where it supports a bladed member in the form of a blade-carrying disc 32, which is designed and configured to process foodstuff urged against it by means of a pusher 27 inserted into the feed-tube 9.

It is usual practice for processors such as 1 to be fitted with safety cutouts, or so-called interlocks, which are intended to prevent operation of the electric motor, and hence the rotation of a bladed member such as 32, in unsafe conditions, for example where the user may have direct access to the blade. In this context, it is usual to provide and electrical and/or mechanical interlock device to prevent operation of the electric motor housed in the food processor's base unit 13 unless the lid 5 is securely latched in place on the bowl 3. Usually the electrical and/or mechanical connections and couplings for the interlock device comprise components configured to run from top to bottom of the bowl 3, sometimes via a channel through a handle 29 or at some other convenient location around the bowl 3. Such interlock component routings may be conveniently used for components related to the invention, as will become clear later.

It is stressed that the present invention is not limited to use with the kind of food processor arrangement shown in Figure 1, which is included merely to assist in explaining the invention and its implementation. There are many different configurations of such machines, and the invention is applicable generally to kitchen machines in which a bladed member is driven through foodstuffs to be processed.

It will be appreciated that one difficulty associated with causing a device, such as a piezoelectric element, to vibrate whilst mounted on a rotating bladed member is that of applying electrical waveforms to the device. In the following examples of the invention, the difficulty is addressed by making use of slip-ring technology, which is well established and reliable in long-term operation. It is stressed, however, that the use of slip-ring technology is not essential to the invention, and other techniques, such as roll-ring technology and remote energy transmission may be used instead if preferred.

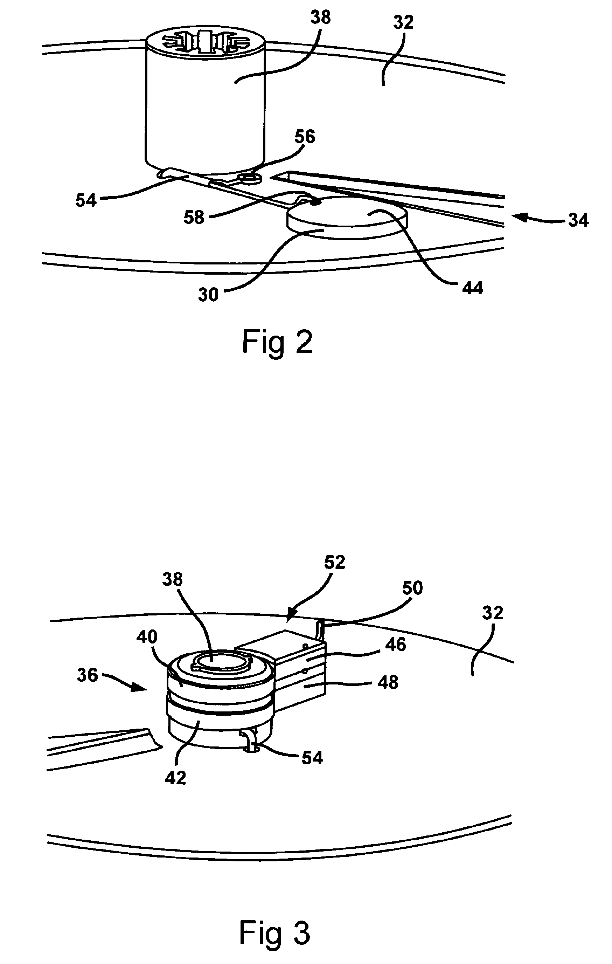

Referring now additionally to Figures 2 and 3 of the drawings, the invention is implemented in this embodiment by means including an "external", i.e. exposed and user-accessible, slip-ring system. A ceramic piezoelectric element 30 is attached, by adhesive bonding for example, to the underside of a bladed member constituted in this instance by the cutting/slicing disc 32 of a kitchen machine such as a food processor. The location of the blade, which may be straight or curved, is shown generally at 34, and the blade is usually slightly raised from the plane of the disc 32. There is a gap in the disc 32, close to the location of the blade, through which foodstuffs cut or sliced by the blade can fall into a receptacle; in this case the bowl (such as 3 in Figure 1) of a food processor 1. When supplied with an electrical waveform of appropriate voltage and frequency, the piezoelectric element 30 vibrates (as is well known) at the rate of the supplied frequency, and with the amplitude of the vibrations determined at least in part by the applied voltage.

As mentioned above, since the piezoelectric element 30 is mounted on the disc 32 which is intended, in operation, to rotate in the bowl of the food processor, power transfer to the element 30 has to take account of the rotary movement. In the present example, the required power transfer is facilitated by the use of an external slip-ring system, generally indicated at 36.

In Figure 3, which shows a partial top-side view of the disc 32, a centre boss 38 of the disc 32 which, in use, locates on and is driven by the drive shaft 25 of the food processor 1, is formed with two conductive rings 40 and 42 which are, of course, electrically insulated from each other. In the present example, the disc 32 is made of a metallic and electrically conductive food-grade material, such as stainless steel. Thus one of the slip rings can be connected to a surface of the disc 32, to which the piezoelectric element 30 is bonded with one of its input terminals in intimate electrical contact. The other slip ring is connected directly to the other input terminal of the element 30, which is located on the exposed (non-bonded) surface 44 (see Figure 2) of the piezoelectric element 30.

The underside of the lid 5 for the food processing bowl 3 conveniently supports a pair of stationary brushes 46, 48 so that they are respectively urged against the conductive rings 40 and 42 in order to supply the necessary electrical waveforms to the piezoelectric element 30 whilst the disc 32, together with the rings 40 and 42, rotates. These brushes are made of food-grade materials in order to avoid contaminating the processed foodstuffs as they wear.

When the machine is in operation and the disc 32 is rotating at the chosen operational speed, the element 30 is energised; the power to energise the element 30 being supplied via an input power cable 50 and through the stationary brushes 46, 48 which are contained in a contact brush housing, generally indicated at 52. This power is in turn transferred to the slip rings 40, 42 and thence via a dual-cored driver cable 54 to the piezoelectric element 30. The leads 54 are coupled to the element 30, as mentioned above, via a positive termination 56 located on the disc 32 and a negative termination 58 located directly on the exposed outer surface 44 of the piezoelectric element 30. The feed for the input power cable 50 originates from a base unit (e.g. 13 in Figure 1) which supports the bowl 3 of the food processor and houses its drive motor, electrical controls etc., and the feed can conveniently be run, alongside the aforementioned electrical and/or mechanical interlocking components provided to ensure that the food processor 1 cannot be operated without its lid 5 being properly secured in place, to terminals at the top edge of the bowl 3. The lid 5 is configured to make contact with the terminals when properly placed on the bowl 3 and carries the cable 50, embedded therein or supported thereon, to the contact brush housing 52.

The base unit such as 13 (Figure 1) of the food processor houses circuitry (not shown) of conventional kind to generate the voltage waveform used to drive the element 30 into oscillation. The shape of the waveform and/or its frequency may be fixed or variable and, if variable, may be automatically determined by food processor settings or operational feedback, or may be manually controllable by a user. Default settings for the frequency and amplitude of the oscillations will be determined in part at least by the dimensions and construction of the bladed member 32, as well as by the element 30.

An alternative technique for supplying operating waveforms to the element 30 utilises internal, or concealed, rotary connections, which provide in effect a sealed system with which the user has no interaction, unlike the system using external slip rings, as described above.

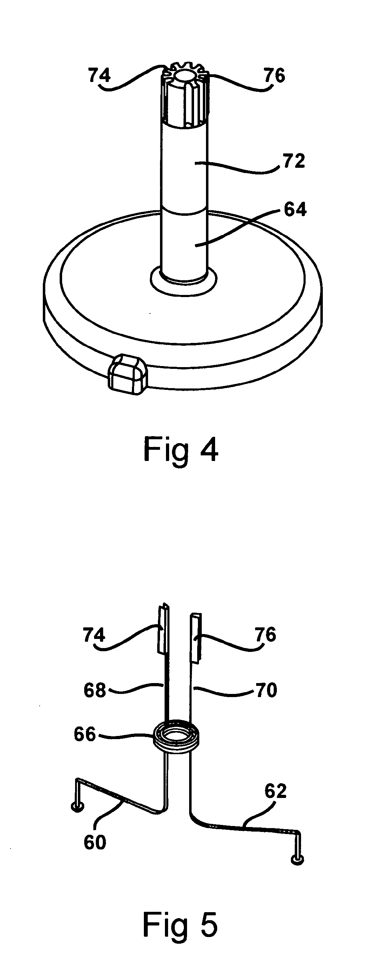

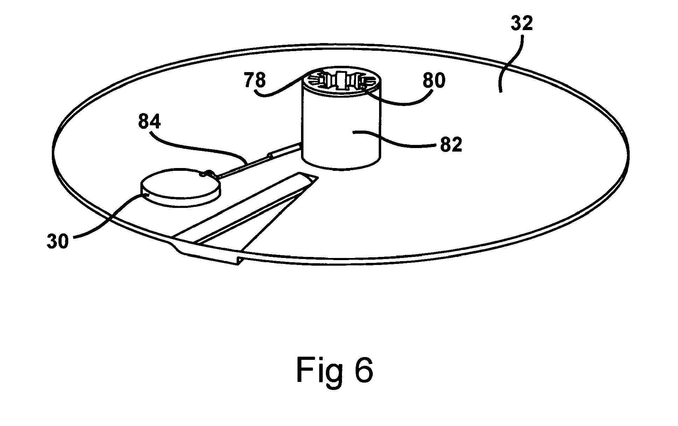

The internal (concealed) technique shown in Figures 4 to 6 is again based on slip-ring principles; however the slip rings used in this system are located in the main drive shaft, requiring the use of a modified form 72 of the drive shaft 25, as will be described.

Referring now to Figures 4 to 6, the electrical waveform required to drive the piezoelectric element 30 is initially transported along suitably routed connectors 60, 62 to respective contacts on a stationary driveshaft/gearbox 64. These contacts are over-moulded and are of a conductive material and of suitable grade to meet the food standards. The electrical waveform is transferred through moulded slip-rings 66 (Figure 5) to strip-like conductors 68, 70 which extend axially along the rotating drive shaft 72 and conveniently terminate at a pair of spaced-apart and mutually insulated splines 74, 76 at the top of the drive shaft 72, which locate into respective slots 78 and 80 in the boss 82 of a drive hub that is located centrally of the disc 32. The slots 78 and 80 contain conductor strips (not shown) which make electrical connection with the splines 74 and 76 to pick up the operating waveforms for the piezoelectric element 30 mounted as before on the underside of the disc 32.

One of the conductor strips is connected directly to the disc 32, so as to establish electrical connection to a terminal on the surface of element 30 that is bonded to the disc. The other is connected to a lead 84, the other end of which is connected to a terminal on the exposed surface of the piezoelectric element 30. By this means, full two-wire contact is established between the conductors 60 and 62, via the slip rings 66, the conductors 68, 70 and the splined coupling between the drive shaft 72 and the disc 32, to the element 30, enabling the element 30 to be energised with the requisite operating waveforms to cause it to vibrate on the disc 32.

In a variation of the above-described embodiments, the piezoelectric element 30 is mounted either directly upon the blade carried by the bladed member (disc) 32, or in close proximity to the blade, and is driven and configured so as to induce a saw-like reciprocating movement in the blade.

The bladed member (disc) 32 may be formed with shaping, thickenings, ribbing and/or other constructional features to focus or direct ultrasonic vibrations towards selected areas of the member; for example towards a blade mounted thereon. Alternatively, or in addition, to such focusing or direction, one or more areas of the disc 32 may be tuned to resonate with the piezoelectric element 30, thereby to enhance the amplitude of the vibratory motion in such area or areas.

## Claims

1. A kitchen machine having a bladed member comprising a disc (32) bearing a blade, means including a motor-driven shaft (25, 72) connectable to the disc (32) for rotating the disc (32) and thereby moving the blade through foodstuffs to be processed, the kitchen machine being **characterized by** means (30) for inducing vibrations in said disc (32) and/or the blade.

2. A kitchen machine according to claim 1, wherein the means for inducing vibrations includes a piezoelectric element (30) attached or coupled to the disc (32) and/or to the blade, and drive means (40, 42, 46, 48, 50, 54; or 60, 62, 66, 68, 70, 74, 76, 78, 80) for applying electrical waveforms of predetermined amplitude and frequency to the element (30).

3. A kitchen machine according to claim 2, wherein said disc (32) has a boss (38) which couples to said shaft (25); said boss (38) supporting slip rings (40, 42) and connection means (54, 56, 58) configured to transfer said electrical waveforms to said piezoelectric element (30) in order to stimulate said vibrations.

4. A kitchen machine according to claim 3, further including brush means (46, 48) for making respective electrical connection with said slip rings (40, 42) and means (50) for applying said electrical waveforms to said brush means.

5. A kitchen machine according to claim 1 or claim 2, wherein said motor-driven shaft (72) extends axially from a base of said machine and wherein said electrical waveforms are coupled to the shaft by way of slip rings (66) fixedly coupled to connectors (68, 70) extending axially along said drive shaft (72).

6. A kitchen machine according to claim 5, wherein said axially-extending connectors (68, 70) terminate in respective splines (74, 76) adapted to couple said shaft (72) to said disc (32).

7. A kitchen machine according to any preceding claim, wherein part at least of the disc (32) is configured to focus or direct ultrasonic vibrations towards one or more selected areas thereof.

8. A kitchen machine according to any preceding claim, wherein one or more areas of the disc (32) are tuned to resonate with said means (30) for inducing vibrations, thereby to enhance the amplitude of the vibratory motion in said area or areas.

## Patentansprüche

1. Küchenmaschine, die Folgendes aufweist: ein Klingenelelement, das eine Scheibe (32) umfasst, die eine Klinge trägt, ein Mittel, das eine motorgetriebene Welle (25, 72) umfasst, die mit der Scheibe (32) verbunden werden kann, um die Scheibe (32) zu drehen und dadurch die Klinge durch zu verarbeitende Lebensmittel zu bewegen, wobei die Küchenmaschine durch ein Mittel (30) zum Induzieren von Vibrationen in der genannten Scheibe (32) und/oder der Klinge gekennzeichnet ist.

2. Küchenmaschine nach Anspruch 1, wobei das Mittel zum Induzieren von Vibrationen Folgendes umfasst: ein piezoelektrisches Element (30), das an der Scheibe (32) und/oder der Klinge angebracht oder damit gekoppelt ist, und Antriebsmittel (40, 42, 46, 48, 50, 54; oder 60, 62, 66, 68, 70, 74, 76, 78, 80) zum Anlegen von elektrischen Wellenformen mit vorbestimmter Amplitude und Frequenz an das Element (30).

3. Küchenmaschine nach Anspruch 2, wobei die genannte Scheibe (32) Folgendes aufweist: einen Vorsprung (38), der mit der genannten Welle (25) gekoppelt ist; wobei der genannte Vorsprung (38) Schleifringe (40, 42) stützt, und Verbindungsmittel (54, 56, 58), die dafür konfiguriert sind, die genannten elektrischen Wellenformen auf das genannte piezoelektrische Element (30) zu übertragen, um die genannten Schwingungen zu stimulieren.

4. Küchenmaschine nach Anspruch 3, die ferner Folgendes umfasst: Bürstenmittel (46, 48), um eine jeweilige elektrische Verbindung mit den genannten Schleifringen (40, 42) herzustellen, und Mittel (50) zum Anlegen der genannten elektrischen Wellenformen an das genannte Bürstenmittel.

5. Küchenmaschine nach Anspruch 1 oder 2, wobei sich die genannte motorgetriebene Welle (72) von einer Basis der genannten Maschine axial erstreckt und wobei die genannten elektrischen Wellenformen mit der Welle über Schleifringe (66) gekoppelt sind, die fest mit Anschlüssen (68, 70) gekoppelt sind, die sich axial entlang der genannten Antriebswelle (72) erstrecken.

6. Küchenmaschine nach Anspruch 5, wobei die genannten sich axial erstreckenden Anschlüsse (68, 70) in entsprechenden Keilen (74, 76) enden, die dafür ausgelegt sind, die genannte Welle (72) mit der genannten Scheibe (32) zu koppeln.

7. Küchenmaschine nach einem der vorhergehenden Ansprüche, wobei mindestens ein Teil der Scheibe (32) dafür konfiguriert ist, Ultraschallschwingungen auf einen oder mehrere ausgewählte Bereiche davon zu fokussieren oder zu leiten.

8. Küchenmaschine nach einem der vorhergehenden Ansprüche, wobei ein oder mehrere Bereiche der Scheibe (32) so abgestimmt sind, dass sie mit dem genannten Mittel (30) schwingen, um Vibrationen zu induzieren, wodurch die Amplitude der Schwingbewegung in dem genannten Bereich oder den Bereichen vergrößert wird.

## Revendications

1. Machine de cuisine possédant un élément à lames comprenant un disque (32) portant une lame, des moyens incluant un arbre entraîné par moteur (25, 72) apte à être raccordé au disque (32) pour faire tourner le disque (32) et par conséquent déplacer la lame à travers des aliments destinés à être transformés, la machine de cuisine étant **caractérisée par** des moyens (30) pour induire des vibrations dans ledit disque (32) et/ou la lame.

2. Machine de cuisine selon la revendication 1, les moyens pour induire des vibrations incluant un élément piézo-électrique (30) attaché ou couplé au disque (32) et/ou à la lame, et des moyens d'entraînement (40, 42, 46, 48, 50, 54 ; ou 60, 62, 66, 68, 70, 74, 76, 78, 80) pour appliquer à l'élément (30) des formes d'onde électriques d'une amplitude et d'une fréquence prédéterminées.

3. Machine de cuisine selon la revendication 2, ledit disque (32) possédant un bossage (38) qui se couple audit arbre (25) ; ledit bossage (38) soutenant des bagues collectrices (40, 42) et des moyens de raccordement (54, 56, 58) configurés de façon à transférer lesdites formes d'onde électriques vers ledit élément piézo-électrique (30) afin de stimuler lesdites vibrations.

4. Machine de cuisine selon la revendication 3, incluant en outre des moyens à balais (46, 48) pour effectuer une connexion électrique respective avec lesdites bagues collectrices (40, 42), et des moyens (50) pour appliquer lesdites formes d'onde électriques auxdits moyens à balais.

5. Machine de cuisine selon la revendication 1 ou la revendication 2, ledit arbre entraîné par moteur (72) s'étendant axialement à partir d'un socle de ladite machine, et lesdites formes d'onde électriques étant couplées à l'arbre au moyen de bagues collectrices (66) lesquelles sont couplées de manière fixe à des connecteurs (68, 70) s'étendant axialement le long dudit arbre d'entraînement (72).

6. Machine selon la revendication 5, lesdits connecteurs s'étendant axialement (68, 70) se terminant dans des cannelures respectives (74, 76) conçues pour se coupler audit arbre (72) et audit disque (32).

7. Machine de cuisine selon l'une quelconque des revendications précédentes, une partie au moins du disque (32) étant configurée de façon à focaliser ou diriger des vibrations ultrasoniques vers une ou plusieurs zones sélectionnées de celle-ci.

8. Machine de cuisine selon l'une quelconque des revendications précédentes, une ou plusieurs zones du disque (32) étant accordées de façon à résonner avec lesdits moyens (30) pour induire des vibrations, ce qui permet par conséquent d'améliorer l'amplitude du mouvement vibratoire dans ladite zone ou lesdites zones.
